# EUROPÄISCHE PATENTSCHRIFT

(11) **EP 0 689 585 B1**
(45) Veröffentlichungstag und Bekanntmachung des Hinweises auf die Patenterteilung: **13.10.1999**
(21) Anmeldenummer: 95906979.0
(22) Anmeldetag: 19.01.1995
(51) Int. Cl.: C12H 1/075

(54) **VERFAHREN ZUM KLÄREN VON BIER MIT HILFE DER CROSSFLOW-MIKROFILTRATION**
BEER CLARIFICATION PROCESS BY CROSSFLOW-MICROFILTRATION
PROCEDE DE CLARIFICATION DE BIERE PAR MICROFILTRATION TANGENTIELLE

(30) Priorität: 19.01.1994 DE 4401456
(43) Veröffentlichungstag der Anmeldung: 03.01.1996
(73) Patentinhaber: WISSENSCHAFTSFÖRDERUNG DER DEUTSCHEN BRAUWIRTSCHAFT E.V., 53175 Bonn (DE)
(72) Erfinder: DENK, Viktor, D-85402 Kranzberg (DE); GANS, Ulrich, CH-9000 St. Gallen (CH)
(74) Vertreter: Hepp, Dieter
(86) Internationale Anmeldenummer: EP9500198
(87) Internationale Veröffentlichungsnummer: WO9520038

(56) Entgegenhaltungen:
- EP-A- 0 126 714
- EP-A- 0 188 068
- DE-A- 4 332 175
- GB-A- 2 190 603
- US-A- 3 992 301
- PATENT ABSTRACTS OF JAPAN vol. 12 no. 159 (C-495) [3006] ,14.Mai 1988 & JP,A,62 272957 (DAICEL CHEM. IND. LTD.) 27.November 1987,

## Beschreibung

Durch die Filtration von Bier sollen Hefe und andere Trübstoffe sowie kolloidal gelöste Stoffe, insbesondere Eiweiße, entfernt werden, um dem Bier ein blankes glanzfreies Aussehen zu geben und die chemisch-physikalische sowie biologische Haltbarkeit zu erhöhen.

Neben der bis heute am häufigsten verwendeten Kieselgurfiltration wird insbesondere aufgrund der kostenintensiven Entsorgung der Kieselgurschlänme versucht, andere Filtrationsverfahren einzusetzen. Ein solches Verfahren ist die Querstrom- bzw. Crossflow-Mikrofiltration, bei der das ungeklärte oder vorgeklärte Bier in einein Filtermodul eine poröse Membran überströmt, so daß sich zwischen dieser überstrom- bzw. Unfiltratseite und der gegenüberliegenden Filtratseite der Membran ein transmembraner Druck einstellt und dadurch ein Teil des die Membran überströmenden Bieres diese quer durchströmt und als gereinigtes Filtrat auf der Filtratseite gesammelt wird. Während dieser Filtration setzen sich auf der Membranoberfläche auf der Unfiltratseite die auszufilternden Inhaltsstoffe teilweise als Deckschicht ab. Diese Deckschicht darf nicht zu kompakt werden, damit die Durchströmung der Membran während des gesamten Filtrationsprozesses sichergestellt ist.

Aus der EP 0 351 363 A1 ist die Crossflow-Mikrofiltration von Bier bekannt, wobei das Bier gleichzeitig während der Filtration mit Hilfe eines Stabilisierungsmittels, vorzugsweise PVPP, stabilisiert wird. Um ein frühzeitiges Zusetzen der Membranporen zu vermeiden, wird dem zu filternden Bier noch ein körniges oder fasriges Filterhilfsmittel zugesetzt, das sich auf der Membran absetzt und eine Verstopfung der Membranporen durch Trubstoffe etc. verhindern soll. Als solches Filterhilfsmittel kann z.B. Kieselgur oder Perlit verwendet werden.

Hiermit ist es zwar möglich, die als Teilchen vorliegenden Inhaltsstoffe des Bieres daran zu hindern, die Membranporen zu verstopfen; es ist jedoch mit diesem Verfahren nicht möglich, die kolloidal gelösten Stoffe, insbesondere Eiweißstoffe durch das Filterhilfsmittel aufzufangen. Diese kolloidal gelösten Inhaltsstoffe bilden bei den notwendigen niedrigen Temperaturen bei der Bierfiltration von ca. 0°C eine gel- oder gallertartige Masse, die die Deckschicht durchdringen und zwangsläufig die Membranporen zusetzen. Die Effektivität der Filtration wird dadurch relativ rasch reduziert. Aus diesem Grunde ist es gemäß dieser europäischen Patentanmeldung vorgesehen, nach Abschluß des Filtrationsprozesses die Membran zu reinigen. Dies kann durch Spülen, Erhöhen oder Umkehr der Überströmgeschwindigkeit erreicht werden oder durch Rückspülung, indem eine gewisse Filtratmenge von der Filtratseite durch die Membran auf die Unfiltratseite gedrückt wird. Die periodische Membranreinigung erfolgt insbesondere durch Spülen, wodurch die Deckschicht zunächst grob teilweise entfernt wird, und durch ein anschließendes Waschen mit heißer Lauge und ein Sterilisieren, wobei gleichzeitig noch das als Stabilisierungsmittel verwendete PVPP in der Anlage gereinigt und regeneriert wird. Der Aufwand für diese Reinigung ist jedoch relativ hoch und zeitaufwendig und verringert die Effektivität der Filtration.

Aus der EP 0 427 376 A2 ist eine Crossflow Mikrofiltrationsanlage bekannt, bei der die Förderpumpe in einen Diagonalzweig einer aus vier Ästen aufgebauten Leitungsschleife eingebaut ist, wobei in sämtlichen Ästen der Schleife ein Absperrventil vorgesehen ist. An den Verzweigungen, an denen die Pumpe angeschlossen ist, ist der Zulauf von einem Vorratstank bzw. der Rücklauf zu dem Vorratstank angeschlossen, während die beiden anderen Verzweigungspunkte an die beiden Enden des Filtermodules angeschlossen sind. Durch Öffnen und Schließen entsprechender Ventile kann bei dieser Filtrationsanlage die Überströmrichtung der Flüssigkeit über die Membran umgekehrt werden. Außerdem ist es durch entsprechend andere Schaltung der Ventile möglich, Flüssigkeit von der Filtratseite durch die Membran zu saugen, um dadurch die Deckschicht mehr oder minder abzubauen. Dies gelingt jedoch nur unvollkommen, da bei der Filtration von Bier die Membranporen auch durch die gel- bzw. gallertartigen kolloidal gelösten Stoffe verstopft sind, die im Gegensatz zu sonstigen Partikel der Deckschicht nicht ohne weiteres durch Rückwaschen entfernt werden können; vielmehr wird die durch die Membran gesaugte Flüssigkeit den Weg des geringsten Widerstandes wählen, d.h. die Membran nur dort durchströmen, wo lokal die Membran durchlässig ist. Eine vollständige Reinigung der Membran ist mit einem solchen Verfahren nicht möglich.

Es ist ferner eine sogenannte integrierte Rückspülung der Membran bekannt, indem der transmembrane Druck längs der Membran z.B. durch Drosseln des Filtratabganges so eingestellt wird, daß ein Teil der Membran, z.B. die in Strömungsrichtung hintere Hälfte von der Filtrat- zur Unfiltratseite von dem Filtrat durchströmt wird, wobei ebenfalls ein Teil der dort vorhandenen Deckschicht entfernt wird; vgl. S. Ripperger, Mikrofiltration mit Membranen, Verlag Chemie, Weinheim, 1992, Seite 133.

Es ist ferner auch vorgeschlagen worden, mehrere Maßnahmen zur Kontrolle der Deckschicht einzusetzen, so z.B. die gerade erwähnte integrierte Rückspülung und zusätzlich während einer kurzen Unterbrechung der Filtration die Rückspülung und Regeneration der Membran mit heißem Wasser und die Umkehr der Überströmungsrichtung; vgl. G.W. Steinhoff, Brauindustrie 7/89, Seiten 748 bis 750, insbesondere Seite 750, rechte Spalte, Abschnitt "Verschiedene Gerätegrößen".

Insbesondere das Zurückdrücken von Filtrat durch die Membran bringt jedoch auch Probleme mit sich, insbesondere infolge der dadurch unvollständig von der Membranoberfläche abgelösten Deckschicht. Da wie oben erwähnt, die Deckschicht insbesondere dort abgelöst wird, wo diese dem Rückspülvorgang nur einen geringen Strömungswiderstand entgegensetzt, werden die Teile der Membranoberfläche, welche eine dicke Deckschicht tragen, "bei der Rückspülung benachteiligt", wie im einzelnen von T. Faust et al., in Chem.-Ing.-Tech. 61, 1989, Nr. 6, Seiten 459 bis 468, insbesondere Seite 466, erläutert wird.

Bei all den bekannten Verfahren sinkt die Effektivität der Filtration im Laufe der Zeit, so daß das Crossflow-Mikrofiltrationsverfahren für die Klärung von Bier bisher wirtschaftlich noch nicht eingesetzt werden konnte. Darüber hinaus müssen mit sinkender, durch die anwachsende Deckschicht bedingter Effektivität der Filtration die Überströmgeschwindigkeit und der transmembrane Druck auf sehr hohe Werte eingestellt werden, wenn überhaupt noch annehmbare Filtrationswirkungen erzielt werden sollen, so daß der Energiebedarf sehr hoch wird. Aufgrund der sinkenden Filtereffektivität sind zusätzlich auch die Standzeiten der verwendeten Membranfilter reduziert.

In der nicht vorveröffentlichten deutschen Patentanmeldung P 42 27 225.4 sind mehrere Maßnahmen vorgeschlagen worden, um das Zusetzen der Membran mit den Inhaltsstoffen des zu filternden Bieres zu verhindern bzw. zu reduzieren. Unter anderem wurde dort vorgeschlagen, den transmembranen Druck und die Überströmgeschwindigkeit des Bieres längs der Oberfläche der Membran als Funktionen der Zeit zu steuern, wobei zu Beginn der Filtration ein niedriger transmembraner Druck und eine hohe Überströmgeschwindigkeit eingestellt und diese Werte im Verlauf der Filtration im Sinne eines ansteigenden transmembranen Druckes und einer abfallenden Überströmgeschwindigkeit variiert werden. Außerdem soll die Filtration in Intervallen kurzfristig unterbrochen und während dieser Unterbrechung die Membran vorzugsweise mit Wasser rückgespült werden. Zwar konnten durch diese Maßnahmen die Filtrationsergebnisse verbessert werden; jedoch sank auch hierbei langfristig die Effektivität der Filtration.

Der Erfindung liegt die Aufgabe zugrunde, ein Verfahren zum Klären von Bier mit Hilfe der Crossflow-Mikrofiltration anzugeben, mit dem auch über lange Filterzeiten hohe Fluxraten bei gleichzeitig relativ geringem Energiebedarf erreicht werden können.

Diese Aufgabe ist gemäß der Erfindung durch die im kennzeichnenden Teil des Patentanspruches 1 angegebenen Merkmale gelöst.

Weitere Ausgestaltungen der Erfindung gehen aus den Unteransprüchen hervor.

Wesentliches Merkmal der Erfindung ist das chemische Anlösen der Deckschicht mit vorzugsweise einer 0,2 bis 5%igen Natronlauge. Hierfür ist nur eine geringe Menge Lauge notwendig, da die Deckschicht und insbesondere die kolloidal gelösten Stoffe lediglich angelöst und durch die Lauge nicht entfernt werden müssen. Die vollständige Entfernung der angelösten Deckschicht erfolgt im wesentlichen rein mechanisch durch das anschließende Rückspülen der Membran mit vorzugsweise Wasser, wodurch die Deckschicht abgehoben wird.

Vorzugsweise wird für die Reinigung der Filter auf der Filtratseite mit der Lauge gefüllt, die dann durch die Membran vorzugsweise mit Hilfe des als Spülmittel dienenden Wassers auf die Unfiltratseite gedrückt wird.

Überdies kann die Lauge bei niedriger Temperatur, z. B. Zimmertemperatur verwendet werden.

Es hat sich ferner herausgestellt, daß die Effektivität der Filtration noch dadurch erhöht werden kann daß der transmembrane Druck nach einer Zeitfunktion so gesteuert wird, daß sich in bestimmten Zeitintervallen eine integrierte Rückspülung mit Filtrat einstellt.

Die Zeitfunktion zur Steuerung des membranen Druckes ist vorzugsweise eine im wesentlichen periodische z.B. sinus-, dreiecks- oder sägezahnähnliche Funktion. Mit der Filtration wird bei einem transmembranen Druck gestartet, der zwischen einem Minimum und einem Maximum liegt und eine Durchströmung der Membran über im wesentlichen deren gesamte Oberfläche ohne Rückfluß von der Filtrat- auf die Unfiltratseite gewährleistet. Nach Erreichen des maximalen transmembranen Druckes wird dieser wiederum in Richtung auf ein Minimum gesteuert, wobei sich dann ab einem bestimmten Druckwert eine integrierte Rückspülung der Membran mit Filtrat von der Filtratseite auf die Unfiltratseite einstellt, die sich solange fortfährt, bis der transmembrane Druck nach Durchlaufen des Minimums wieder einen entsprechenden Wert erreicht, bei dem die Membran vollständig von der Unfiltratauf die Filtratseite durchströmt wird. Der Filtrationseffekt kann insgesamt verbessert werden, wenn nach Ende der integrierten Rückspülung die Flußrichtung des die Membran überströmenden Bieres umgekehrt wird. Das Bier überströmt dann zunächst den durch die integrierte Rückspülung zumindest teilweise gereinigten Bereich der Membran, so daß sich dort eine hohe Fluxrate einstellt. Diese Fließrichtungsumkehr sollte nach jedem integrierten Rückspülen erfolgen.

Es hat sich als vorteilhaft herausgestellt, zusätzlich zu der Steuerung des transmembranen Druckes auch die Überströmgeschwindigkeit des Unfiltrates längs der Membran zu steuern, und zwar derart, daß nach Beginn der Filtration die Überströmgeschwindigkeit im wesentlichen kontinuierlich vergrößert wird. Der Filtrationsprozeß wird demnach mit einer relativ geringen Überströmgeschwindigkeit gestartet, die dann allmählich angehoben wird. Diese Maßnahme hat auch energetische Gründe: Bei einer anfänglich relativ geringen Überströmgeschwindigkeit wird aufgrund der noch sauberen Membran eine hohe ausreichende Fluxrate erreicht, wobei später durch die ansteigende Überströmgeschwindigkeit die sich auf der Membran absetzenden Partikel durch das schnell darüberströmende Unfiltrat zumindest teilweise fortgerissen werden, so daß eine allzu dicke Deckschicht vermieden wird.

Auch wenn zwischen dem Beginn der Filtration und der Reinigungs- und Spülphase die Fließrichtung des Bieres umgekehrt wird, ist es vorteilhaft, den Absolutwert der Überströmgeschwindigkeit in der neuen Richtung etwa auf den Endwert der vorhergehenden Überströmphase einzustellen, so daß der Absolutwert der Überströmgeschwindigkeit zwischen Beginn der Filtration und der Reinigungs- und Spülphase im wesentlichen kontinuierlich angehoben wird.

Diese Anhebung der Überströmgeschwindigkeit kann für jede Filtrationsphase zwischen zwei Reinigungs-. und Spülphasen vorgenommen werden; es ist jedoch auch möglich, die Geschwindigkeitssteuerung lediglich in der Anfangsphase einer Filtration vorzunehmen und dann die Überströmgeschwindigkeit während der restlichen Filtrationsdauer etwa auf einem konstanten gehobenen Niveau zu halten.

Die Erfindung ist in Ausführungsbeispielen anhand der Zeichnung näher erläutert; in dieser stellen dar:
Fig. 1 ein schematisches Diagramm einer Anlage zum Klären von Bier mit Hilfe der Crossflow-Mikrofiltration gemäß der Erfindung;

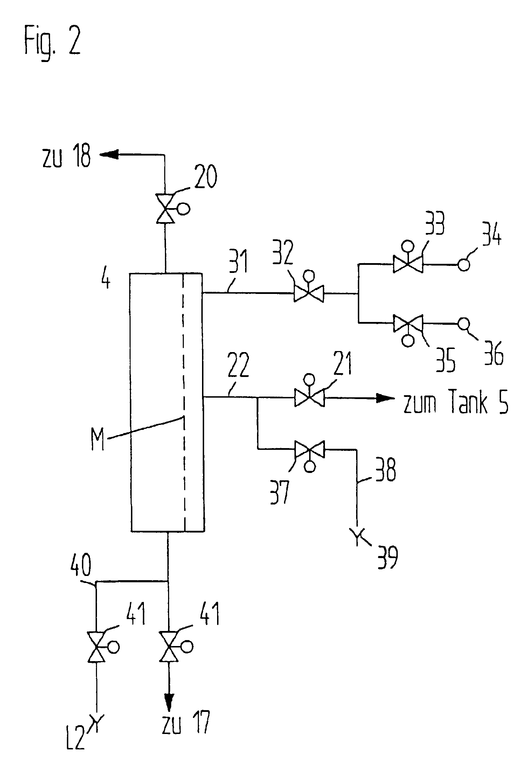

Fig. 2 eine schematische Darstellung eines verwendeten Croosflow-Filters mit seinen Anschlüssen;
Fig. 3 ein Kurvendiagramm zur Erläuterung der Steuerung des transmembranen Druckes und der Überströmgeschwindigkeit des Bieres über die Membran eines Filtermodules;
Fig. 4 ein Kurvendiagramm für eine modifizierte Steuerung des transmembranen Druckes und dr Überströmgeschwindigkeit;
Fig. 5 ein Zeitdiagramm der mittleren Fluxrate in Abhängigkeit der Zeit für einen gemäß der Erfindung ausgeführten Filtrationsversuch und einen zugehörigen Vergleichsversuch;
Fig. 6 der spezifische Energieeintrag in Abhängigkeit der Zeit für den Versuch gemäß der Erfindung und den zugehörigen Vergleichsversuch gemäß Fig. 5; und
Fig. 7 eine Anordnung der Pumpe und mehrerer Filtermodule für eine modifizierte Versuchsanlage.

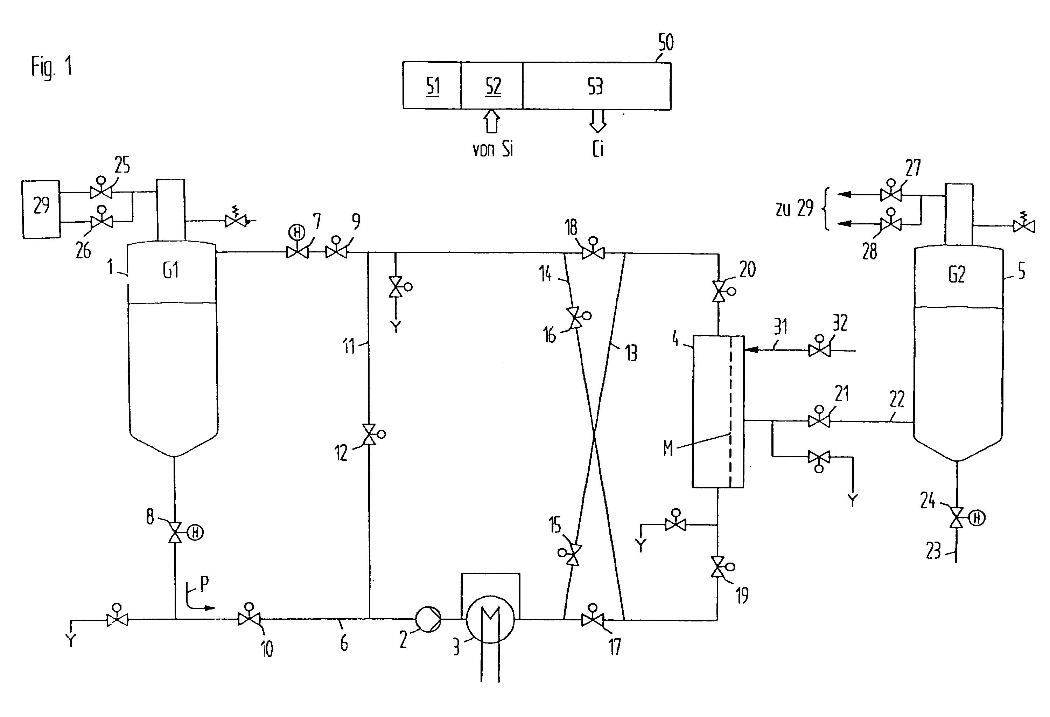

Die Filtrationsanlage gemäß Fig. 1 weist einen Vorratstank 1 für das zu klärende Bier, d.h. das Unfiltrat, auf, ferner eine Förderpumpe 2, einen Wärmetauscher 3,. ein Filtermodul 4 und einen Auffangtank 5 für das gefilterte Bier. Sämtliche Elemente sind durch ein Leitungssystem 6 verbunden, um einen Kreislauf des Bieres zwischen Vorratstank, Förderpumpe, Wärmetauscher und Modul zu ermöglichen. Die Menge des im Kreislauf fließenden Bieres kann durch zwei Drosseln 7 und 8 am Einlauf und Auslauf des Vorratstankes eingestellt werden. Jeder Drossel 7 bzw. 8 ist noch ein Absperrventil 9 bzw. 10 stromab- bzw. stromaufwärts zugeordnet. In der Anlage gemäß Fig. 1 fließt das zu klärende Bier im Gegenuhrzeigersinn durch das Leitungssystem 6, wie durch den Pfeil P angedeutet.

Zwischen den beiden Absperrventilen 9 und 10 ist noch eine Querleitung 11 mit einem Absperrventil 12 vorgesehen, die ebenfalls dazu dient, den Kreislauf innerhalb des Leitungssystemes zu regulieren. Die erwähnten Drosseln und Absperrventile können so eingestellt werden, daß das Bier in seinem Kreislauf durch das Leitungssystem 6 entweder vollständig, nur teilweise oder zumindest in einigen Zeitabschnitten überhaupt nicht durch den Vorratstank 1 strömt.

In dem Leitungssystem sind noch zwei weitere Querleitungen 13 und 14 vorgesehen, die zwischen dem Ausgang des Wärmetauschers 3 und dem des Filtermodules verlaufen und in denen jeweils ein Ventil 15 bzw. 16 angeordnet ist. Zwischen der Abzweigung der Querleitung 13 und dem Eingang des Filtermodules 14 sowie zwischen dem Ausgang des Filtermodules 4 und dem Abzweigungspunkt der Querleitung 14 ist jeweils ein Ventil 17 bzw. 18 vorgesehen. Mit Hilfe der Querleitungen 13, 14 und den Ventilen 15 bis 18 kann die Strömungsrichtung in dem Filtermodul umgekehrt und ganz allgemein der Kreislauf des Bieres in dem Leitungssystem 6 beeinflußt werden.

Ein- und Ausgang des Filtermodules 4 sind ebenfalls jeweils mit einem Absperrventil 19 bzw. 20 versehen.

Von dem Filtermodul 4 zweigt eine durch ein Ventil 21 zu unterbrechende Leitung 22 ab, die zum Auffangtank 5 führt, aus dem das Bier über eine Entnahmeleitung 23 und ein Ventil 24 abgezogen werden kann.

Mit dem Vorratstank 1 bzw. dem Auffangtank 5 ist noch über jeweils zwei Ventile 25, 26 bzw. 27 und 28 ein Gastank 29 mit entsprechenden Pump- und Saugeinrichtungen versehen, der dazu dient, über den ungefilterten Bier im Vorratstank 1 bzw. dem gefilterten Bier im Auffangtank 5 ein Gaspolster G1 bzw. G2 einzurichten.

Das Filtermodul 4 ist in der Figur nur sehr schematisch als Block mit einer gestrichelt angedeuteten Membrananordnung M angegeben. Üblicherweise weist eine solche Filtereinheit eine Vielzahl von z.B. rohrförmigen Filtermodulan mit einer inneren konzentrischen Membran auf, durch die das zu filternde Bier strömt.

In die Filtratseite des Filtermodules 4 mündet noch eine Leitung 31, die mit Hilfe eines Ventiles 32 absperrbar ist. Nach dem Ventil 32 verzweigt sich die Leitung, wobei ein Zweig über ein Ventil 33 zu einem Anschluß 34 für die Zufuhr von Natronlauge und der andere Zweig über ein Ventil 35 zu einem Wasseranschluß 36 führt.

Vor dem Ventil 21 zweigt von der Leitung 22 noch eine durch ein Ventil 37 absperrbare Leitung 38 ab, die über einen Abfluß 39 zu einem nicht dargestellten Laugenaufbereitungsbehälter führt.

Zwischen Filtermodul 4 und dem Ventil 19 zweigt noch eine Leitung 40 ab, die über ein Ventil 41 in einen Abfluß 42 bzw. in den erwähnten Laugenaufbereitungsbehälter führt.

Es sind noch mehrere Sensoren, hier die Sensoren S1 bis S10 vorgesehen, mit denen je nach Funktion der Druck in dem System, die Temperatur des Bieres, die Durchflußmenge etc. gemessen werden.

Die beschriebene Anlage wird mit Hilfe einer Steuer- und Regeleinrichtung 50 gesteuert, die z.B. aus einer Programmeinheit 51, einer Eingabe- und Auswerteeinheit 52 und der eigentlichen Steuerung 53 besteht. Über die Eingabeeinheit 52 können die gewünschten Verfahrensparameter eingegeben werden; außerdem werden dieser Einheit auch die Signale der Sensoren zugeführt, so daß gegebenenfalls das in der Programmeinheit 51 festgelegte Programm zur Steuerung der gesamten Anlage beeinflußt werden kann. Von der Steuerung 53 werden dann Steuersignale Ci an die einzelnen Elemente der Anlage gegeben, insbesondere an die erwähnten, für die Steuerung notwendigen Ventile, die Pumpe 2 und den Wärmetauscher 3.

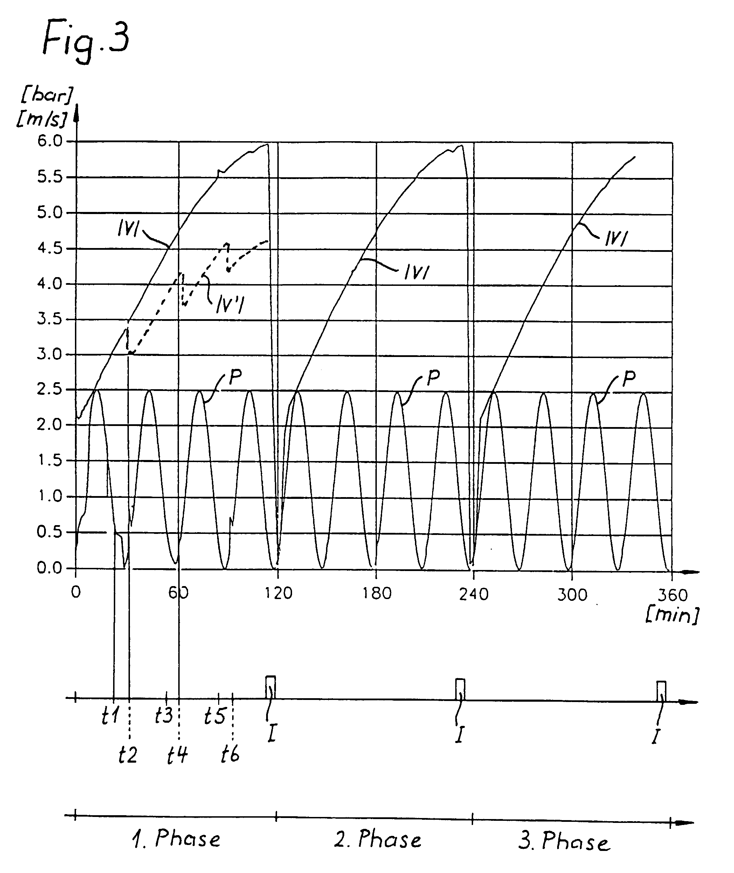

In Fig. 3 ist über der Zeit t in Minuten der Verlauf des transmembranen Druckes p sowie der Absolutbetrag der Überströmgeschwindigkeit v für einen Filtrationsprozeß mit mehreren Filtrationsphasen aufgetragen.

Der Verlauf des transmembranen Druckes p folgt einer sinusähnlichen Funktion mit einer Periodendauer von ca. 30 Minuten, wobei in diesem Versuch eine Filtrationsphase jeweils 120 Minuten dauert. Zu Beginn der ersten Filtrationsphase wird der transmembrane Druck rasch auf etwa 0.5 bar hochgefahren, so daß die Membran über ihre gesamte Oberfläche von dem ungefilterten Bier durchströmt wird. Der transmembrane Druck wird anschließend erhöht und nach Erreichen des ersten Maximums bei etwa 2,5 bar wieder abgesenkt, wobei diese Drucksteuerung durch eine entsprechende Steuerung der Gaspolster G1 und G2 erfolgt. Etwa zum Zeitpunkt tl erreicht der Druck einen so geringen Wert, daß nunmehr die oben erwähnte integrierte Rückspülung der Membran M beginnt. Bei Erreichen des Minimalwertes von ca. 0 bar wird dann etwa die Hälfte der Membranfläche von der Filtratseite auf die Unfiltratseite mit Filtrat durchströmt. Nach Durchfahren des Minimums wird der Druck erneut angehoben und erreicht etwa zum Zeitpunkt t2 einen Wert etwa entsprechend dem Anfangswert, so daß die integrierte Rückspülung der Membran M beendet und diese wiederum auf ihrer gesamten Fläche von der Unfiltratseite auf die Filtratseite durchströmt wird.

Dieses Spiel wird nun wiederholt, so daß sich jeweils zwischen den Zeiten t3 und t4 sowie t5 und t6 diese integrierte Rückspülphase einstellt.

Zusätzlich wird nach jeder integrierten Rückspülphase, d.h. zu den Zeitpunkten t2, t4 und t6 die Fließrichtung des Bieres längs der Membran umgekehrt, wobei möglichst rasch wieder der vor der Fließrichtungsumkehr erreichte Absolutwert der Überströmungsgeschwindigkeit eingestellt wird, wie dieses durch die durchgezogene Kurve der Absolutgeschwindigkeit in Fig. 3 dargestellt ist. Eine andere Möglichkeit besteht darin, den Absolutwert der Überströmgeschwindigkeit nach der gestrichelten Kurve v' zu steuern, die nach der ersten Fliessrichtungsumkehr demnach niedriger liegt. Diese geringere Geschwindigkeit ist in der Regel ausreichend, da durch den erwähnten integrierten Rückspülvorgang die Membran zumindest teilweise gereinigt worden ist und die Fluxrate trotz der etwas niedrigeren Geschwindigkeit hoch gehalten werden kann.

Nach Durchfahren des vierten Maximums und Absenken des transmembranen Druckes wird die Filtration unterbrochen und im anschliessenden kurzen Filtrations-Intervall bzw. der Pause I die Deckschicht von der Membranoberfläche entfernt. Hierzu wird das Filtermodul 4 entleert sowie durch Schliessen der Ventile 19, 20 und 21 von der übrigen Anlage getrennt. Das Bier wird in der Anlage weiterhin im Kreislauf gehalten, z.B. durch Absperren der Ventile 16 und 17 und Öffnen der Ventile 15 und 18. Dies dient insbesondere dem Zweck, die Temperatur des Bieres auf der Filtrationstemperatur von etwa 0°C zu halten. Die Filtrationsanlage wird also nicht gereinigt, sondern der Filtrationsprozess wird nur durch kurze Intervalle unterbrochen, um die Deckschicht zu lösen.

Das Filtermodul wird dazu bei geschlossenen Ventilen 19, 20 und 21 auf der Filtratseite vom Anschluss 34 über die Ventile 33 und 32 sowie die Leitung 31 mit einer 0,2- bis 5%igen Natronlauge gefüllt. Anschliessend wird die Lauge durch Nachströmen von Wasser aus dem Wasseranschluss 36 durch die Membran gedrückt. Hierdurch wird die Deckschicht auf der Unfiltratseite der Membran bzw. ihre Haftung an der Membran chemisch angelöst, so dass insbesondere die in den Membranporen vorhandenen gelartigen Stoffe zumindest chemisch angelöst werden. Die abgeführte Lauge kann anschliessend aufbereitet und für weitere Spülvorgänge verwendet werden. Durch eine anschliessende Rückspülung der Membran mit Wasser von der Filtrat- auf die Unfiltratseite wird die angelöste Deckschicht praktisch vollständig von der Membran mechanisch weggedrückt und die Membran gespült.

Das Anlösen der Deckschicht mit der Lauge dauert etwa 45 Sekunden bis zwei Minuten, vorzugsweise eine knappe Minute. Die Rückspülung mit Wasser dauert etwa zwei bis zwanzig Minuten und vorzugsweise drei bis sechs Minuten, je nach Grösse des Membranfilters.

In jedem Falle sind diese Zeiten wesentlich kleiner als die Dauer der Filtrations-Phasen zwischen den Intervallen und auch als die Dauer der eigentlichen konventionellen Reinigungsphase nach Abschluss der Filtrations-Phase. Derartige Reinigungsphasen dauern bis zu zwei Stunden und erfassen mehrere Stufen, wie dies z.B. in der vorstehend erwähnten Literaturstelle "Ripperger, Mikrofiltration mit Membranen, Seite 250" oder der EP-A-351,363 beschrieben ist. In dem Filtrations-Intervallen kann noch eine Neutralisierungsphase vorgesehen werden, in welcher das Filtermodul kurz mit einer Säure, z.B. Salpetersäure mit einem pH-Wert zwischen 2 und 3 gespült wird. Werden andere Getränke, z.B. Fruchtsäfte gefiltert, muss eine Reinigungsflüssigkeit gewählt werden, welche die gegebenenfalls anders zusammengesetzte Deckschicht anlöst. Bei Fruchtsäften haben sich Laugen ebenfalls bewährt.

Nach der vollständigen oder jedenfalls weitgehenden Entfernung der Deckschichten von der Membran wird das Filtermodul wieder entleert z.B. mit Hilfe von CO₂ leergedrückt, wonach die nächsten Filtrations-Phasen folgen. Ein derartiger Filterprozess kann bei der beschriebenen Anlage bis 120 Stunden dauern. Danach wird die Anlage in der erwähnten Weise durch Reinigungsmittel vollständig gereinigt und gespült.

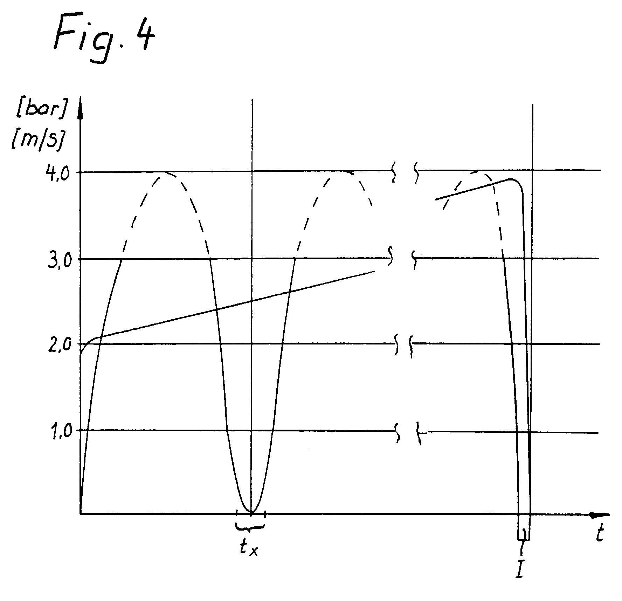

In Fig. 4 ist schematisch ein Zeitdiagramm für einen modifiziert gesteuerten Filtrationsprozess angegeben. Die Zeitfunktion für den transmembranen Druck ähnelt wiederum einem Sinus mit einem eigentlichen Maximum bei etwa 4 bar, dessen Amplitude jedoch bei etwa 3 bar abgeschnitten und auf diesem Niveau bis zum Schnittpunkt mit dem gestrichelt gezeichneten Sinus gehalten wird, so dass sich ein Plateau auf relativ hohem Druckniveau ergibt. Die wiederum als Absolutwert aufgetragene Überströmgeschwindigkeit wird während der Filtrations-Phase von etwa 2 m/s bis auf 4 m/s angehoben, wobei wie oben etwa alle 30 Minuten bei tₓ die Fliessrichtung umgekehrt wird. Die Zwischen-Reinigung der Membran erfolgt im Intervall I frühestens nach dem zweiten Druckplateau. Es können jedoch wie oben auch mehrere Zyklen durchfahren werden. Obwohl bekannterweise bei hohen Drücken durch den dabei zu erreichenden hohen Flux die Deckschicht stark anwächst und komprimiert wird und somit auf Dauer die Effektivität der Filtration stark absinkt, kann dieser Effekt durch die mit der Erfindung vorgeschlagenen Massnahmen aufgefangen werden, so dass eine hohe mittlere Fluxrate erreicht wird.

Bei den geschilderten und im Schema in den Fig. 3 und 4 dargestellten Abläufen der Filtration wiederholen sich die einzelnen Vorgänge im wesentlichen periodisch. Es ist jedoch durchaus möglich, daß sich etwa die Amplitude und Periode des transmembranen Druckes im Laufe der Zeit ändern können; die Steuerung der Amplitude und des Druckes erfolgt dabei aufgrund der mit den Sensoren gemessenen Parameter. Die Periodizität kann jedoch in der Regel über weite Zeiten aufrechterhalten werden, was ein Vorteil bei der Programmierung und Automatisierung des Filtrationsprozesses ist.

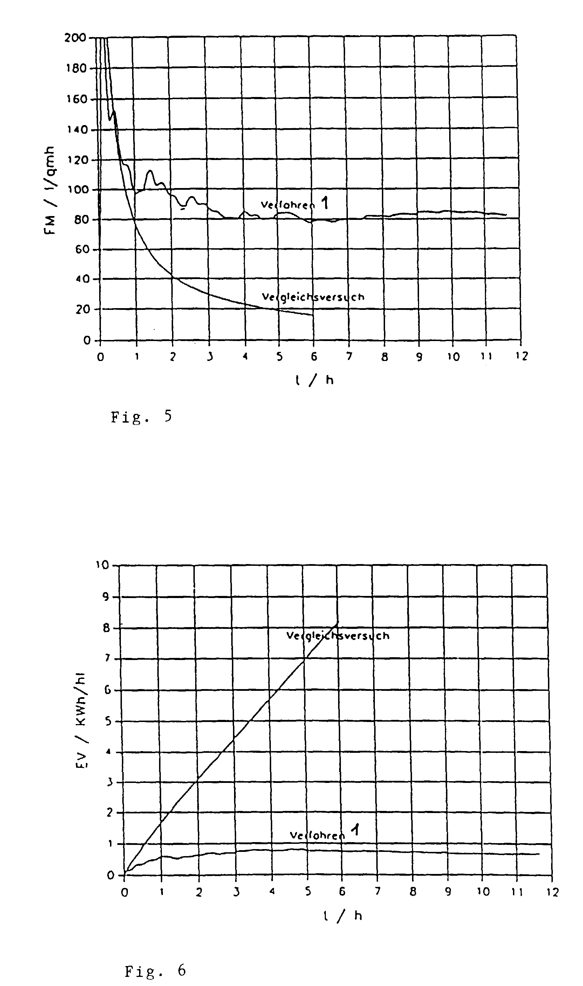

Entscheidend bei dem beschriebenen Filtrationsverfahren ist, daß sich eine annähernd konstante mittlere Fluxrate und auch ein etwa konstanter mittlerer Energiebedarf über die Zeit ergibt; vgl. hierzu die Fig. 5 und 6:

Die Fig. 5 und 6 zeigen Daten für eine Filtration gemäß der Erfindung entsprechend der in Zusammenhang mit der Fig. 3 erläuterten Steuerung von Druck und Überströmgeschwindigkeit (Verfahren 1) und für einen Vergleichsversuch, bei dem die Überströmgeschwindigkeit auf 6 m/s und dr transmembrane Druck auf 1,5 bar eingestellt wurden.

Man sieht, daß sich gemäß der Erfindung nach einer Einschwingzeit eine mittlere konstante Fluxrate von ca. 80 Litern pro Quadratmeter Filterfläche und Stunde einstellt, die über viele Stunden gehalten werden kann. Dieser Versuch wurde zwar nach 12 Stunden abgebrochen, jedoch könnte die Filtration noch wesentlich länger andauern, ohne daß sich an den Ergebnissen wesentliches ändert. In einer Demonstrationsanlage wurden Versuche mit über 20 Stunden Dauer problemlos gefahren.

Im Gegensatz hierzu ist bei dem Vergleichsversuch bereits nach zwei Stunden die Fluxrate auf etwa 40 Liter pro Quadratmeter und Stunde und nach sechs Stunden auf weniger als 20 Liter pro Quadratmeter und Stunde abgesunken, wonach dieser Versuch abgebrochen wurde.

Ein weiterer entscheidender Vorteil der Filtration gemäß der Erfindung ist jedoch der geringe Energiebedarf: Während gemäß der Erfindung ein im wesentlichen konstanter mittlerer Energiebedarf von etwa 0,7 Kilowattstunden pro Hektoliter benötigt wurde, stieg für den Vergleichsversuch der Energiebedarf kontinuierlich bis auf 7 Kilowattstunden pro Hektoliter bei sechs Stunden an. Hiermit ist offensichtlich, daß die gemäß der Erfindung ausgeführte Crossflow-Mikrofiltration auch für die Klärung von Bier wirtschaftlich eingesetzt werden kann.

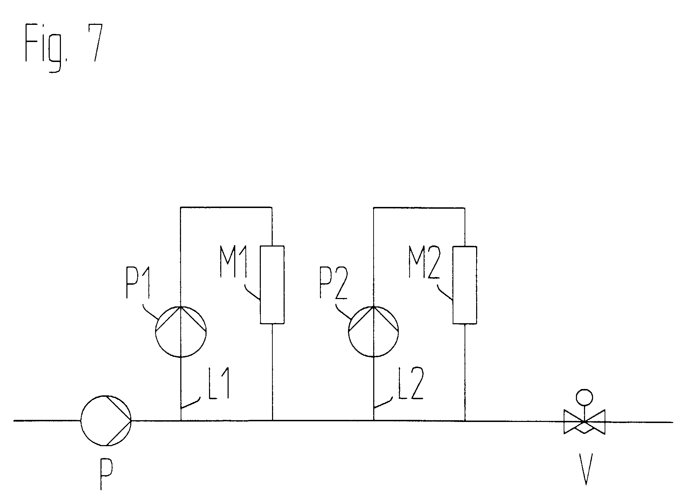

Bei den geschilderten Ausführungsbeispielen wurde der transmembrane Druck im wesentlichen durch Variierung der beiden Gaspolster G1 und G2 gesteuert. Die Steuerung des Druckes kann jedoch auch anders, z. B. mit Hilfe einer Pumpe erfolgen, wie dieses schematisch in Fig. 7 dargestellt ist.

In der Fig. 7 ist mit P eine Speisepumpe für die gesamte Membranfilteranlage bezeichnet. Sie zieht das zu filtrierende Bier aus dem hier nicht dargestellten Vorratstank ab und fördert es durch das Druckhalteventil V entweder - beim sogenannten Batch-Betrieb - zurück zum Vorratstank oder - bei kontinuierlichen Betrieb - in einen Sammelbehälter für konzentriertes Bier. Das Druckhalteventil V kann nun stufenlos geöffnet bzw. geschlossen werden, so daß der Druck in der Speiseleitung auf den gewünschten Wert eingestellt werden kann, der als Eingangsdruck an den einzelnen Filtermodulen anliegt. Zur Variation des Druckes kann zusätzlich die Drehzahl der Speisepumpe verändert werden.

Von der Speiseleitung zweigen mehrere, in diesem Falle zwei Leitungen L1 und L2 ab, die jeweils zu einer Pumpe P1 bzw. P2 und von dort zu einem Modul M1 bzw. M2 sowie zurück zur Speiseleitung führen. Diese Pumpen P1 und P2 fördern das Bier durch die Module und wieder zurück in die Speiseleitung. Die Anordnung kann selbstverständlich noch mit weiteren Filtermodulen entsprechend erweitert werden.

In der Fig. 7 sind die Wärmetauscher, Sensoren etc. nicht eingezeichnet.

In einer Demonstrationsanlage wurden für die Überströmgeschwindigkeit Werte zwischen 0,2 und 15 Meter pro Sekunde, vorzugsweise zwischen 0,5 und 8 Meter pro Sekunde und für den transmembranen Druck Werte bis 6 bar verwendet. Die Membranen hatten Porendurchmesser zwischen 0,1 und 2,0 Mikrometer, vorzugsweise zwischen 0,2 und 1,0 Mikrometer. Die Temperatur des Bieres wurde für die Filtration auf etwa 0°C eingestellt.

Es wurden auch Filtrationen mit einem anderen als dem geschilderten Steuerschema ausgeführt, nämlich:
periodisches Anlösen der Deckschicht und mechanische Entfernung durch anschließende Wasserrückspülung bei konstant gehaltenem Druck und konstanter Überströmgeschwindigkeit mit und ohne Fließrichtungsumkeht;
periodisches Anlösen der Deckschicht mit anschließender Wasserrückspülung bei konstantem transmembranen Druck und ansteigender Überströmgeschwindigkeit, ebenfalls mit und ohne Fließrichtungsumkehr;
periodisches Anlösen der Deckschicht mit anschließender Wasserrückspülung bei variiertem transmembranen Druck und konstanter Überströmgeschwindigkeit, ebenfalls mit und ohne Fließrichtungsumkehr.

Für die Drucksteuerung wurden auch andere variierende Zeitfunktionen mit abwechselnden Maxima und Minima verwendet, insbesondere sägezahn- dreiecksähnliche Zeitfunktionen. Ferner wurde bei einer Geschwindigkeitssteuerung in der ersten Filtrationsphase die Überströmgeschwindigkeit in den nachfolgenden Filtrationsphasen auf relativ hohem Niveau im wesentlichen konstant gehalten.

Auch diese Varianten, insbesondere die ober erwähnte zweite und dritte Variante, zeigten gute Ergebnisse hinsichtlich Fluxrate und Energiebedarf. Die Kombination der oben in Verbindung mit den Fig. 3 und 4 beschriebenen Schritte erwies sich für die Filtration jedoch am wirkungsvollsten, d.h.

Variieren des transmembranen Druckes nach einer im wesentlichen periodischen sinusähnlichen Zeitfunktion mit integrierter Rückspülung,

im wesentlichen kontinuierliche Vergrößerung der Überströmgeschwindigkeit zumindest während der ersten Filtrationsphase,

Anlösen der Deckschicht mit Lauge und Rückspülen der Membran mit Wasser nach jeder Filtrationsphase.

## Patentansprüche

1. Verfahren zum Erhöhen des Filtratdurchsatzes des Cross-flow-Membranfilters einer Filtrationsanlage bei der Filtration von Getränken, insbesondere von Bier, durch periodisches Entfernen von angelagerten Membran-Deckschichten in kurzen Filtrations-Intervallen (tx; t₁-t₂; t₃-t₄; t₅-t₆; I) eines Filtrationsprozesses, dadurch gekennzeichnet, dass die Membran in ersten Filtrations-Intervallen (I) mit einer Reinigungsflüssigkeit bespült und die Haftung der Deckschichten an der Membran chemisch angelöst wird, dass die angelösten Deckschichten anschliessend mit Spülflüssigkeit, vorzugsweise Wasser, von der Filtratseite auf die Unfiltratseite rückgespült und wenigstens teilweise entfernt werden.

2. Verfahren nach Anspruch 1, dadurch gekennzeichnet, dass die Filtrationsanlage nach Abschluss des Filtrationsprozesses mit Reinigungsflüssigkeit gereinigt und gespült wird.

3. Verfahren nach Anspruch 1 oder 2, dadurch gekennzeichnet, dass die Einwirkzeit der Reinigungsflüssigkeit in einem Filtrations-Intervall (I) etwa 45 Sekunden bis zwei Minuten und vorzugsweise eine Minute beträgt.

4. Verfahren nach einem der Ansprüche 1 bis 3, dadurch gekennzeichnet, dass die Rückspülzeit in einem Filtrations-Intervall (I), etwa zwei bis zwanzig Minuten und vorzugsweise drei bis sechs Minuten beträgt.

5. Verfahren nach einem der Ansprüche 1 bis 4, dadurch gekennzeichnet, dass in den Filtrations-Intervallen (I) die Reinigungsflüssigkeit auf der Filtratseite in den Filter gefüllt und von der Filtrat- auf die Unfiltratseite durch die Membran, vorzugsweise mit Hilfe der Spülflüssigkeit gedrückt wird.

6. Verfahren nach einem der Ansprüche 1 bis 5, dadurch gekennzeichnet, dass in jeder Filtrations-Phase der transmembrane Druck (p) nach einer Zeitfunktion die abwechselnd jeweils ein Maximum und ein Minimum aufweist, gesteuert wird, wobei die Druckwerte im Bereich um die Minima so eingestellt werden, dass dort in zweiten Filtrations-Intervallen (tx; t₁-t₂; t₃-t₄; t₅-t₆) während der Filtration zumindest ein Teil der Membran von der Filtrat- zur Unfiltratseite durchströmt und damit integriert rückgespült und gereinigt wird, und dass die Pause zum Reinigen der Membran frühestens nach dem zweiten Maximum des transmembranen Druckverlaufes beginnt.

7. Verfahren nach einem der vorhergehenden Ansprüche, dadurch gekennzeichnet, dass die Fliessrichtung des die Membran überströmenden Bieres in bestimmten Zeitintervallen, vorzugsweise jeweils nach einer integrierten Rückspülung der Membran entsprechend Anspruch 6, umgekehrt wird.

8. Verfahren nach einem der vorhergehenden Ansprüche, dadurch gekennzeichnet, dass die Intervalle (I) für das Anlösen der Deckschicht und die Spülung der Membran wesentlich kürzer als die Filtrations-Phasen sind.

9. Verfahren nach einem der vorhergehenden Ansprüche, dadurch gekennzeichnet, dass als Reinigungsflüssigkeit Natronlauge, vorzugsweise eine 0,2- bis 5%ige Natronlauge verwendet wird.

10. Verfahren nach einem der vorhergehenden Ansprüche, dadurch gekennzeichnet, dass die Filtrationsphasen mit den anschliessenden Pausen im wesentlichen periodisch ablaufen.

## Claims

1. Method of raising the filtrate throughput of a cross flow membrane filter of a filtration plant during the filtration of beverages, in particular of beer, by means of periodical removal of the deposited membrane covering layers in short filtration intervals (tx; t₁-t₂; t₃-t₄; t₅-t₆, I) of a filtration process, characterized in that, in initial filtration intervals (I), the membrane is rinsed through with a cleaning liquid and the bond of the covering layers on the membrane is chemically etched, that the etched covering layers are subsequently subjected to backflow with rinsing liquid, preferably water, from the filtrate side to the non-filtrate side and at least partially removed.

2. Method according to claim 1, characterized in that the filtration plant is cleaned and rinsed with cleaning liquid after completion of the filtration process.

3. Method according to claims 1 or 2, characterized in that the reaction time of the cleaning liquid in a filtration interval (I) amounts to between approximately 45 seconds and two minutes, and preferably one minute.

4. Method according to one of the claims 1 to 3, characterized in that the backwash time in a filtration interval (I) amounts to between two and twenty minutes and preferably three to six minutes.

5. Method according to one of the claims 1 to 4, characterized in that in the filtration intervals (I), the cleaning liquid is filled into the filter from the filtrate side and pressed through the membrane from the filtrate side to the non-filtrate side, preferably with the aid of the rinsing liquid.

6. Method according to one of the claims 1 to 5, characterized in that in each filtration phase, the transmembrane pressure (p) is controlled according to a time function that alternatingly in each case possesses a maximum and a minimum, the pressure values in the area of the minima being so adjusted that, at that setting, in second filtration intervals (tx; t₁-t₂, t₃-t₄; t₅-t₆,), during filtration at least a part ofthe membrane will be subjected to flowthrough from the filtrate to the non-filtrate side and thus subjected to integrated backwash and cleaned, and that the pause for cleaning the membrane commences at the earliest after the second maximum of the transmembrane pressure sequence.

7. Method according to one of the preceding claims, characterized in that the direction of flow of the beer flowing over the membrane is reversed after specific intervals of time, preferably in each case after an integrated backwash of the memrane according to claim 6.

8. Method according to one of the preceding claims, characterized in that the intervals (I) for etching the covering layer and rinsing of the membrane are considerably shorter than the filtration phases.

9. Method according to one of the preceding claims, characterized in that caustic soda is used as a cleaning liquid, preferably a 0,2% to 5% caustic soda.

10. Method according to one of the preceding claims, characterized in that caustic soda is used as a cleaning liquid, preferably a 0,2% to 5% caustic soda.

## Revendications

1. Procédé pour augmenter le débit de filtrat du filtre à diaphragme pour filtration transversale d'une installation de filtrage pour des boissons, en particulier de la bière, par élimination périodique de couches de recouvrement de diaphragme déposées, lors d'intervalles de filtration courts (tx ; t₁-t₂ ; t₃-t₄ t₅-t₆ ; I) d'un processus de filtration, caractérisé en ce que pendant des premiers intervalles de filtration (I), le diaphragme est rincé à l'aide d'un liquide de nettoyage et l'adhérence des couches de recouvrement sur le diaphragme est supprimée chimiquement, et en ce que les couches de recouvrement détachées sont ensuite soumises à un lavage à contre-courant avec un liquide de lavage, de préférence de l'eau, du côté filtrat vers le côté produit non filtré, et au moins partiellement éliminées.

2. Procédé selon la revendication 1, caractérisé en ce que l'installation de filtration est nettoyée avec un liquide de nettoyage et rincée une fois que le processus de filtration est terminé.

3. Procédé selon la revendication 1 ou 2, caractérisé en ce que le temps d'action du liquide de nettoyage pendant un intervalle de filtration (I) est d'environ 45 secondes à deux minutes, et de préférence d'une minute.

4. Procédé selon l'une des revendications 1 à 3, caractérisé en ce que le temps de lavage à contre-courant pendant un intervalle de filtration (I) est d'environ deux à vingt minutes, et de préférence de trois à six minutes.

5. Procédé selon l'une des revendications 1 à 4, caractérisé en ce que pendant les intervalles de filtration (I), le liquide de nettoyage est amené dans le filtre par le côté filtrat et est poussé du côté filtrat vers le côté produit non filtré à travers la membrane, de préférence à l'aide du produit de lavage.

6. Procédé selon l'une des revendications 1 à 5, caractérisé en ce que dans chaque phase de filtration, la pression transmembrane (p) est commandée suivant une fonction de temps qui présente en alternance un maximum et un minimum, les valeurs de pression étant réglées dans la zone des minima de telle sorte qu'à cet endroit, lors de seconds intervalles de temps (tx ; t₁-t₂ ; t₃-t₄ t₅-t₆) pendant la filtration, une partie au moins de la membrane soit traversée du côté filtrat vers le côté produit non filtré et soit ainsi lavée à contre-courant et nettoyée de façon intégrée, et en ce que la pause pour le nettoyage de la membrane commence au plus tôt après le second maximum de la courbe de pression transmembrane.

7. Procédé selon l'une des revendications précédentes, caractérisé en ce que le sens d'écoulement de la bière qui déborde de la membrane est inversé suivant des intervalles de temps définis, de préférence après un lavage à contre-courant intégré de la membrane selon la revendication 6.

8. Procédé selon l'une des revendications précédentes, caractérisé en ce que les intervalles (I) pour le détachement de la couche de recouvrement et le rinçage de la membrane sont nettement plus courts que les phases de filtration.

9. Procédé selon l'une des revendications précédentes, caractérisé en ce qu'on utilise comme liquide de nettoyage de la soude caustique, de préférence une soude caustique à 0,2 à 5 %.

10. Procédé selon l'une des revendications précédentes, caractérisé en ce que les phases de filtration avec les pauses consécutives se déroulent globalement périodiquement.
